# EUROPEAN PATENT SPECIFICATION

(11) **EP 2 882 168 B1**
(45) Date of publication and mention of the grant of the patent: **07.12.2016**
(21) Application number: 13861331.0
(22) Date of filing: 19.07.2013
(51) Int. Cl.: G06F 3/14, G06F 9/44, G09G 5/14, G06F 9/455

(54) **METHOD, SYSTEM AND CLIENT DEVICE FOR MAPPING MULTIPLE VIRTUAL MACHINES**
VERFAHREN, SYSTEM UND CLIENT-VORRICHTUNG ZUR ABBILDUNG VON MEHREREN VIRTUELLEN MASCHINEN
PROCÉDÉ, SYSTÈME ET DISPOSITIF CLIENT POUR LE MAPPAGE DE PLUSIEURS MACHINES VIRTUELLES

(30) Priority: 07.12.2012 CN 201210524180
(43) Date of publication of application: 10.06.2015
(73) Proprietor: Huawei Technologies Co., Ltd., Longgang District Shenzhen, Guangdong 518129 (CN)
(72) Inventor: HU, Zhaoyang, Shenzhen Guangdong 518129 (CN); GAO, Xiaohong, Shenzhen Guangdong 518129 (CN); XIONG, Wenhui, Shenzhen Guangdong 518129 (CN)
(74) Representative: Gill Jennings & Every LLP
(86) International application number: PCT/CN2013/079682
(87) International publication number: WO 2014/086151

(56) References cited:
- WO-A1-2011/073973
- CN-A- 101 493 783
- CN-A- 102 681 887
- CN-U- 201 876 864
- US-A1- 2011 107 229
- US-A1- 2011 185 355
- US-A1- 2012 151 369

## Description

### TECHNICAL FIELD

The present invention relates to the field of cloud computing technologies, and in particular, to a method and a system for mapping multiple virtual machines, and a client device.

### BACKGROUND

Cloud computing (Cloud Computing) is a technology for providing dynamically scalable virtualized resources by using the Internet. A network can be conveniently accessed by means of cloud computing, and storage and management of mass data can be implemented by means of arrangement of a large number of storage devices. A virtual machine (Virtual Machine, VM) refers to a complete computer system that is emulated by using software, has complete hardware system functions, and operates in a completely isolated environment. Generally, multiple VMs can be emulated on one physical computer, and a user can access a virtual machine of the user on a cloud server through a network by using a client.

In the prior art, a user may access a certain VM based on a remote desktop protocol by using a client device, and display, on a display screen connected to the client device, a virtual desktop mapped to the VM. When multiple applications simultaneously run in the accessed VM, different applications may be displayed on different display screens connected to the client device. However, when multiple VMs are allocated to the user, the user can access only one VM at a time by using the client device. Pub. US 20110107299A discloses systems, methods and other embodiments associated with persisting information concerning per-user, per-connection display configuration control. Pub. US 20120151369 discloses examples of methods, systems, apparatus and machine-readable storage media to facilitate access and control of a remote desktop of a remote machine by a web browser at a client device through a transcoding server without installing proprietary plug-ins or protocols on the client device.

### SUMMARY

Embodiments of the present invention provide a method and a system for mapping multiple virtual machines, and a client device, so as to solve a problem in the prior art that multiple VMs cannot be simultaneously mapped, leading to poor user application experience.

To solve the foregoing technical problem, the embodiments of the present invention disclose the following technical solutions.

A first aspect provides a method for mapping multiple virtual machines, where the method includes:
separately acquiring, by a client device, display parameters of N connected display devices;
when the client device is connected to M virtual machines, separately receiving, by the client device, virtual desktops pushed by the M virtual machines;
separately selecting, by the client device according to the display parameters of the N display devices, display devices for the M virtual machines from the N display devices; and
outputting, by the client device, the virtual desktops of the M virtual machines to the display devices separately selected for the M virtual machines, to display the virtual desktops, where N is not less than M, N and M are both natural numbers, and M is not less than 2;
wherein the method further comprises:
   when the client device is connected to an external device, separately acquiring peripheral policies of the M virtual machines, and acquiring a type of the external device;
   mapping the external device onto L virtual machines whose peripheral policies match the type of the external device, wherein L is a natural number, and L is not less than 1 and not greater than M; and
   allocating a right of use of the external device to at least one virtual machine in the L mapped virtual machines according to the type of the external device;
   wherein the allocating a right of use of the external device to at least one virtual machine in the L mapped virtual machines according to the type of the external device specifically comprises:
when the type of the external device is an audio device, allocating a right of use of the audio device to one virtual machine in the L virtual machines, wherein the virtual machine acquiring the right of use of the audio device is a virtual machine currently operated by a user by using the client device; and
when the type of the external device is an interface device, allocating a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus, USB, interface device.

With reference to the first aspect, in a first possible implementation manner of the first aspect,
the separately acquiring, by a client device, display parameters of N connected display devices specifically includes: separately acquiring, by the client device, the display parameters of the N display devices by invoking a driver, where the display parameters include usage status parameters of the display devices; and
the outputting, by the client device, the virtual desktops of the M virtual machines to the
display devices separately selected for the M virtual machines, to display the virtual desktops specifically includes: outputting, by the client device by invoking the driver, the virtual desktops of the M virtual machines to the display devices separately selected for the M virtual machines, to display the virtual desktops.

With reference to the first aspect or the first possible implementation manner of the first aspect, in a second possible implementation manner of the first aspect, the separately receiving, by the client device, virtual desktops pushed by the M virtual machines specifically includes:
establishing desktop protocol channels between the client device and the M virtual machines;
   and
separately receiving the virtual desktops that are transmitted by the M virtual machines through the established desktop protocol channels.

With reference to the first aspect, or the first possible implementation manner of the first aspect, or the second possible implementation manner of the first aspect, in a third possible implementation manner of the first aspect, the separately selecting, by the client device according to the display parameters of the N display devices, display devices for the M virtual machines from the N display devices specifically includes:
when a new virtual machine is connected, checking, by the client device, the usage status parameters in the display parameters of the N display devices according to an order in which the M virtual machines are connected; and
allocating a display device whose usage status parameter is "unused" in the N display devices to the newly connected virtual machine.

A second aspect provides a system for mapping multiple virtual machines, where the system includes: a client device and N display devices connected to the client device, where
the client device is configured to: separately acquire display parameters of the N display devices; when the client device is connected to M virtual machines, separately receive virtual desktops pushed by the M virtual machines; separately select, according to the display parameters of the N display devices, display devices for the M virtual machines from the N display devices; and output the virtual desktops of the M virtual machines to the display devices separately selected for the M virtual machines, where N is not less than M, N and M are both natural numbers, and M is not less than 2; and
the display devices separately selected for the M virtual machines are separately configured to display the virtual desktops of the M virtual machines output by the client device;
the client device is further configured to: when the client device is connected to an external device, separately acquire peripheral policies of the M virtual machines, and acquire a type of the external device; map the external device onto L virtual machines whose peripheral policies match the type of the external device, wherein L is a natural number, and L is not less than 1 and not greater than M; and allocate a right of use of the external device to at least one of the L mapped virtual machines according to the type of the external device;

wherein the allocate a right of use of the external device to at least one virtual machine in the L mapped virtual machines according to the type of the external device specifically comprises:
when the type of the external device is an audio device, allocating a right of use of the audio device to one virtual machine in the L virtual machines, wherein the virtual machine acquiring the right of use of the audio device is a virtual machine currently operated by a user by using the client device; and
when the type of the external device is an interface device, allocating a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus,USB, interface device.

A third aspect provides a client device, where the client device includes:
an acquisition unit, configured to separately acquire display parameters of N connected display devices;
a receiving unit, configured to: when the client device is connected to M virtual machines, separately receive virtual desktops pushed by the M virtual machines;
a selection unit, configured to separately select display devices for the M virtual machines from the N display devices according to the display parameters of the N display devices acquired by the acquisition unit; and
an output unit, configured to output the virtual desktops of the M virtual machines received by the receiving unit to the display devices separately selected by the selection unit for the M virtual machines, to display the virtual desktops, where N is not less than M, N and M are both natural numbers, and M is not less than 2;
wherein the acquisition unit is further configured to: when the client device is connected to an external device, separately acquire peripheral policies of the M virtual machines, and acquire a type
of the external device; and
the client device further comprises:
   a mapping unit, configured to map the external device onto L virtual machines whose peripheral policies match the type of the external device, wherein L is a natural number, and L is not less than 1 and not greater than M; and
   an allocation unit, configured to allocate, according to the type of the external device, a right of use of the external device to at least one virtual machine in the L virtual machines mapped by the mapping unit;
   wherein the allocation unit comprises at least one of the following units:
      a first allocation subunit, configured to: when the type of the external device is an audio device, allocate a right of use of the audio device to one virtual machine in the L virtual machines, wherein the virtual machine acquiring the right of use of the audio device is a virtual machine currently operated by a user by using the client device; and
      a second allocation subunit, configured to: when the type of the external device is an interface device, allocate a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus USB interface device.

With reference to the third aspect, in a first possible implementation manner of the third aspect,
the acquisition unit is specifically configured to separately acquire the display parameters of the N display devices by invoking a driver, where the display parameters include usage status parameters of the display devices; and
the output unit is specifically configured to output, by invoking the driver, the virtual desktops of the M virtual machines to the display devices separately selected for the M virtual machines, to display the virtual desktops.

With reference to the third aspect or the first possible implementation manner of the third aspect, in a second possible implementation manner of the third aspect, the receiving unit includes:
a channel establishing subunit, configured to establish desktop protocol channels between the client device and the M virtual machines; and
a desktop receiving subunit, configured to separately receive the virtual desktops that are transmitted by the M virtual machines through the desktop protocol channels established by the channel establishing subunit.

With reference to the third aspect, or the first possible implementation manner of the third aspect, or the second possible implementation manner of the third aspect, in a third possible implementation manner of the third aspect, the selection unit includes:
a status checking subunit, configured to: when a new virtual machine is connected, check the usage status parameters in the display parameters of the N display devices according to an order in which the M virtual machines are connected; and
a device allocating subunit, configured to allocate a display device whose usage status parameter is "unused" in the N display devices to the newly connected virtual machine according to usage statuses of the display devices checked by the status checking subunit.

A fourth aspect provides a client device, where the client device includes: a bus, and a network interface, a peripheral interface, a driver interface, and a processor that are connected by using the bus, where
the peripheral interface is configured to connect to N display devices;
the network interface is configured to connect to M virtual machines; and
the processor is configured to: separately acquire display parameters of the N display devices; separately receive virtual desktops pushed by the M virtual machines; separately select, according to the display parameters of the N display devices, display devices for the M virtual machines from the N display devices; and output, through the driver interface, the virtual desktops of the M virtual machines to the display devices separately selected for the M virtual machines, to display the virtual desktops, where N is not less than M, N and M are both natural numbers, and M is not less than 2.

With reference to the fourth aspect, in a first possible implementation manner of the fourth aspect,
the processor is specifically configured to: separately acquire the display parameters of the N display devices by invoking a driver by using the driver interface, where the display parameters include usage status parameters of the display devices; and output, by invoking the driver by using the driver interface, the virtual desktops of the M virtual machines to the display devices separately selected for the M virtual machines, to display the virtual desktops.

With reference to the fourth aspect or the first possible implementation manner of the fourth aspect, in a second possible implementation manner of the fourth aspect, the processor is specifically configured to establish desktop protocol channels between the client device and the M virtual machines by using the network interface, and separately receive the virtual desktops that are transmitted by the M virtual machines through the established desktop protocol channels.

With reference to the fourth aspect, or the first possible implementation manner of the fourth aspect, or the second possible implementation manner of the fourth aspect, in a third possible implementation manner of the fourth aspect, the processor is specifically configured to: when a new virtual machine is connected, check the usage status parameters in the display parameters of the N display devices according to an order in which the M virtual machines are connected; and allocate a display device whose usage status parameter is "unused" in the N display devices to the newly connected virtual machine.

With reference to the fourth aspect, or the first possible implementation manner of the fourth aspect, or the second possible implementation manner of the fourth aspect, or the third possible implementation manner of the fourth aspect, in a fourth possible implementation manner of the fourth aspect, the peripheral interface is further configured to connect to an external device;
the driver interface is further configured to report a connection event of the external device to the processor; and
the processor is further configured to: separately acquire peripheral policies of the M virtual machines according to the connection event reported by the driver interface, and acquire a type of the external device connected to the peripheral interface; map the external device onto L virtual machines whose peripheral policies match the type of the external device, where L is a natural number, and L is not less than 1 and not greater than M; and allocate a right of use of the external device to at least one virtual machine of the L mapped virtual machines according to the type of the external device.

With reference to the fourth possible implementation manner of the fourth aspect, in a fifth possible implementation manner of the fourth aspect,
the processor is specifically configured to: when the type of the external device is an audio device, allocate a right of use of the audio device to one virtual machine in the L virtual machines, where the virtual machine acquiring the right of use of the audio device is a virtual machine currently operated by a user by using the client device; or when the type of the external device is an interface device, allocate a right of use of the interface device to one virtual machine in the L virtual machines by means of token negotiation, where the virtual machine acquiring the right of use of the interface device is a virtual machine requesting the interface device, and the interface device is a parallel/serial interface device or a Universal Serial Bus USB interface device.

In the embodiments of the present invention, a client device may separately acquire display parameters of N connected display devices; when the client device is connected to M virtual machines, separately receive virtual desktops pushed by the M virtual machines; separately select, according to the display parameters of the N display devices, display devices for the M virtual machines from the N display devices; and output the virtual desktops of the M virtual machines to the display devices separately selected for the M virtual machines, to display the virtual desktops, where N and M are both natural numbers, N is not less than M, and M is not less than 2. By using the embodiments of the present invention, when the client device is connected to multiple display devices, virtual desktops of multiple connected virtual machines may be separately mapped onto different display devices for display, thereby improving utilization of the client device, and meeting demands of a user when multiple virtual machines are used. In addition, when the client device is connected to an external device, the external device may also be mapped onto the multiple connected virtual machines, and a right of use of the external device is allocated to a virtual machine according to policy control, thereby improving flexibility of mapping of the multiple virtual machines.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1A is a flowchart of an embodiment of a method for mapping multiple virtual machines according to the present invention;
FIG. 1B is a schematic structural diagram showing that multiple virtual machines are displayed on different screens according to the embodiment of the present invention;
FIG. 2A is a flowchart of another embodiment of a method for mapping multiple virtual machines according to the present invention;
FIG. 2B is a schematic diagram of internal logic of a client device implementing the embodiment in FIG. 2A;
FIG. 3A is a flowchart of another embodiment of a method for mapping multiple virtual machines according to the present invention;
FIG. 3B is a schematic diagram of internal logic of a client device implementing the embodiment in FIG. 3A;
FIG. 4 is a block diagram of an embodiment of a system for mapping multiple virtual machines according to the present invention;
FIG. 5 is a block diagram of an embodiment of a client device according to the present invention;
FIG. 6 is a block diagram of another embodiment of a client device according to the present invention; and
FIG. 7 is a block diagram of another embodiment of a client device according to the present invention.

### DESCRIPTION OF EMBODIMENTS

The following embodiments of the present invention provide a method and a system for mapping multiple virtual machines, and a client device.

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

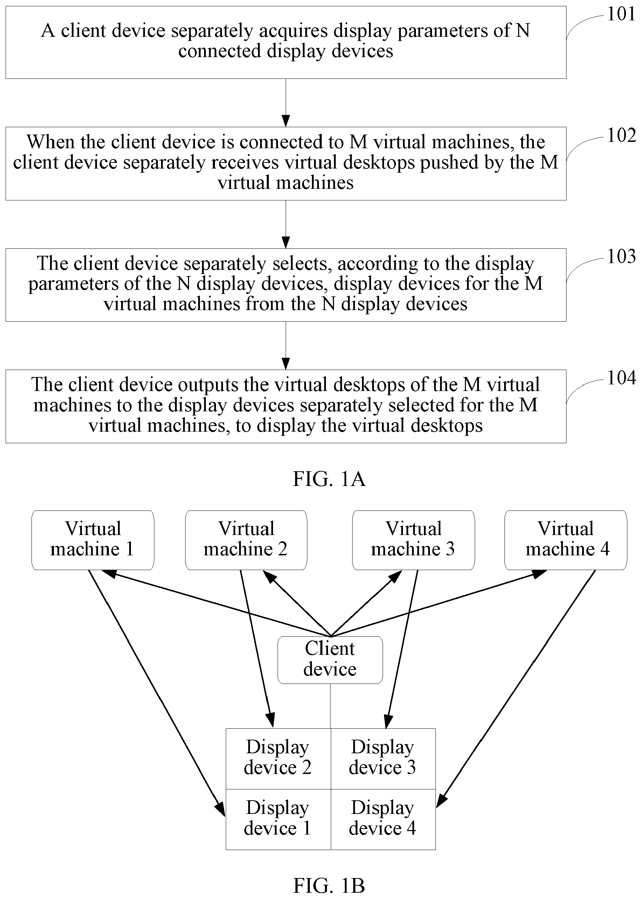

Refer to FIG. 1, which is a flowchart of an embodiment of a method for mapping multiple virtual machines according to the present invention.

Step 101: A client device separately acquires display parameters of N connected display devices.

In this embodiment, the client device may specifically refer to a thin client (Thin Client, TC) device. Multiple peripheral interfaces configured to connect to display devices may be set on the client device, and the display devices may be specifically liquid crystal displays. The client device may separately acquire the display parameters of the N display devices by invoking a bottom-layer driver, where N is a natural number that is not less than 2. The display parameters may include usage status parameters of the display devices. Further, the display parameters may further include the number of display devices, a resolution parameter of each display device, and the like.

Step 102: When the client device is connected to M virtual machines, the client device separately receives virtual desktops pushed by the M virtual machines.

Generally, M virtual machines may be allocated to one user, and the user may acquire a list of the M virtual machines by using the client device. The client device may establish desktop protocol channels between the client device and the M virtual machines, and separately receive the virtual desktops that are transmitted by the M virtual machines through the established desktop protocol channels. M is a natural number that is not less than 2 and not greater than N.

Refer to FIG. 1B, which is a schematic structural diagram showing that multiple virtual machines are displayed on different screens according to this embodiment of the present invention. The client device is connected to fourth display devices, which are a display device 1, a display device 2, a display device 3, and a display device 4 separately, and the client device is connected to four virtual machines allocated to a user, which are a virtual machine 1, a virtual machine 2, a virtual machine 3, and a virtual machine 4 separately.

Step 103: The client device separately selects, according to the display parameters of the N display devices, display devices for the M virtual machines from the N display devices.

When a new virtual machine is connected, the client device checks the usage status parameters in the display parameters of the N display devices according to an order in which the M virtual machines are connected, and allocates a display device whose usage status parameter is "unused" in the N display devices to the newly connected virtual machine. For example, the client device may prerecord sequence numbers of multiple display devices, and initially, a usage status parameter of each display device is "unused". With reference to FIG. 1A, it is assumed that when the virtual machine 1 is connected to the client device, the client device may detect that usage status parameters of all the display devices are "unused", and the display device 1 is allocated to the virtual machine 1; subsequently, when the virtual machine 2 is connected to the client device, the client device may detect that a usage status parameter of the display device 1 is "used", and the unused display device 2 is successively allocated to the virtual machine 2, and by analogy, the display device 3 is allocated to the virtual machine 3, and the display device 4 is allocated to the virtual machine 4.

Step 104: The client device outputs the virtual desktops of the M virtual machines to the display devices separately selected for the M virtual machines, to display the virtual desktops.

In this embodiment, the client device may output, by invoking the bottom-layer driver, the virtual desktops of the M virtual machines to the display devices separately selected for the M virtual machines, to display the virtual desktops. As can be known with reference to FIG. 1B, the client device outputs a virtual desktop of the virtual machine 1 to the display device 1 for display, outputs a virtual desktop of the virtual machine 2 to the display device 2 for display, outputs a virtual desktop of the virtual machine 3 to the display device 3 for display, and outputs a virtual desktop of the virtual machine 4 to the display device 4 for display.

As can be seen from the foregoing embodiment, when a client device is connected to multiple display devices, virtual desktops of multiple connected virtual machines may be separately mapped onto different display devices for display, thereby improving utilization of the client device, and meeting demands of a user when multiple virtual machines are used.

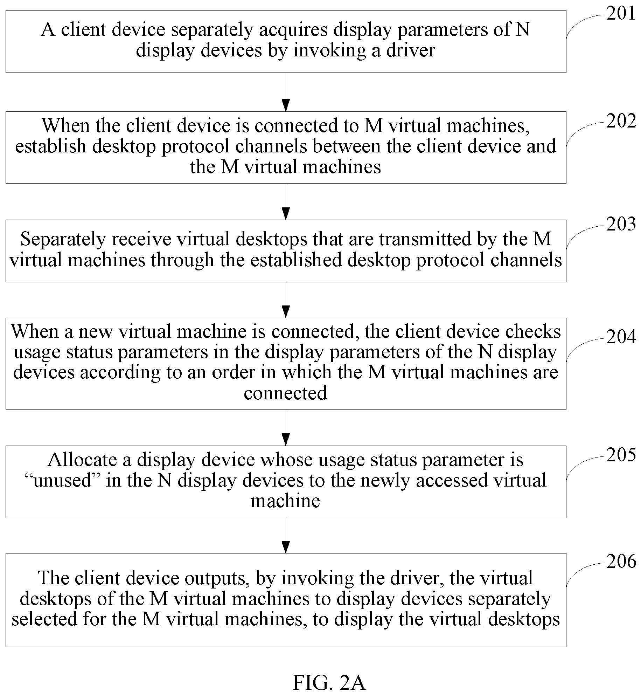

Refer to FIG. 2A, which is a flowchart of another embodiment of a method for mapping multiple virtual machines according to the present invention. This embodiment shows a mapping process in which multiple virtual machines are displayed on different screens.

Step 201: A client device separately acquires display parameters of N connected display devices by invoking a bottom-layer driver.

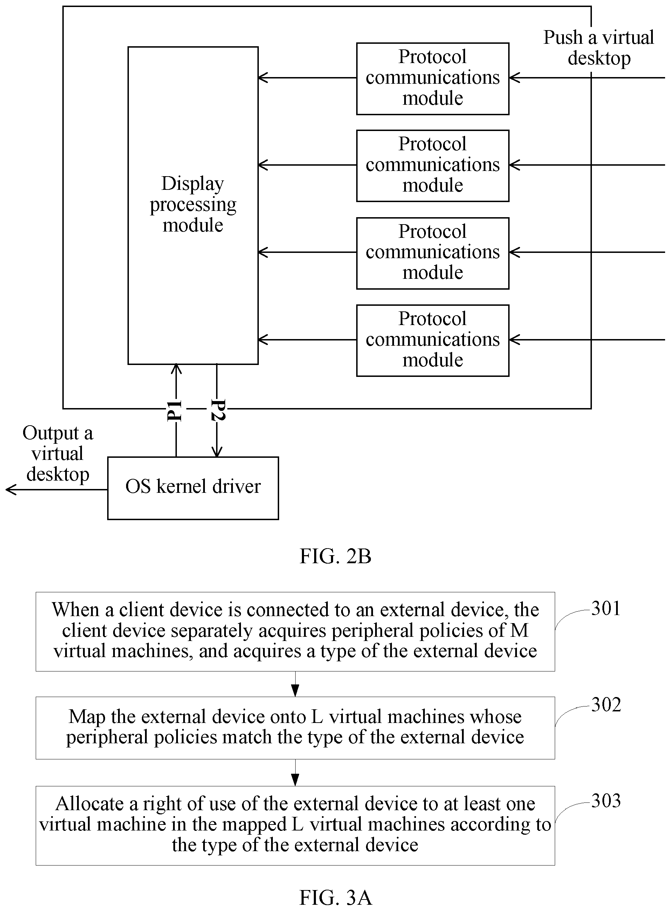

Refer to FIG. 2B, which is a schematic diagram of internal logic of the client device implementing the embodiment in FIG. 2A. The client device includes an operating system (Operating System, OS) kernel driver, a display processing module, and a protocol communications module, where an interface that can be invoked by the display processing module is set on the OS kernel driver. In a practical application, functions of the display processing module and the protocol communications module in FIG. 2B may be integrated into one chip, and the OS kernel driver may be stored in a memory of the client device; or the display processing module, the protocol communications module, and the OS kernel driver are all integrated into one chip.

The OS kernel driver is a bottom-layer driver set in the client device, the OS kernel driver may be configured to detect the display parameters of the N connected display devices, and the display parameters include usage status parameters of the display devices and may further include the number of connected display devices, resolution parameters of the display devices, and the like, where N is a natural number that is not less than 2. The OS kernel driver may transmit the display parameters of the display devices to the display processing module through an interface between the OS kernel driver and the display processing module. As shown in FIG. 2B, the OS kernel driver may transmit the display parameters of the display devices to the display processing module through a P1 interface between the OS kernel driver and the display processing module.

Step 202: When the client device is connected to M virtual machines, establish desktop protocol channels between the client device and the M virtual machines.

Generally, M virtual machines may be allocated to one user, and the user may acquire a list of M virtual machines by using the client device, where M is a natural number that is not less than 2 and not greater than N. With reference to FIG. 2B, in this embodiment, each time the client device is connected to one virtual machine, a desktop protocol channel is established between the protocol communications module and the virtual machine, and a process of establishing the protocol channel is the same as a process in which an existing client device is connected to one virtual machine, and details are not described herein again.

Step 203: Separately receive virtual desktops that are transmitted by the M virtual machines through the established desktop protocol channels.

With reference to FIG. 2B, after the desktop protocol channel is established between the protocol communications module and the virtual machine, the virtual machine may push data of a mapped virtual desktop to the protocol communications module through the desktop protocol channel, and the protocol communications module sends the data of the virtual desktop to the display processing module for processing.

Step 204: When a new virtual machine is connected, the client device checks usage status parameters in the display parameters of the N display devices according to an order in which the M virtual machines are connected.

With reference to FIG. 2B, the display parameters of the display devices reported by the OS kernel driver through the P1 interface are stored in the display processing module, where the display parameters include the usage status parameters of the display devices. When allocating display devices to the virtual machines, the display processing module needs to check the usage status parameters of the display devices, so as to select a display device from display devices whose usage status parameters are "unused", and allocate the display device to the newly connected virtual machine.

Step 205: Allocate a display device whose usage status parameter is "unused" in the N display devices to the newly connected virtual machine.

For example, sequence numbers of multiple display devices are recorded in the display processing module, and initially, a usage status parameter of each display device reported by the OS kernel driver is "unused". With reference to FIG. 1A, it is assumed that when a virtual machine 1 is connected to the client device, the display processing module may acquire that usage status parameters of all display devices are "unused", and a display device 1 is allocated to the virtual machine 1; subsequently, when a virtual machine 2 is connected to the client device, the display processing module may acquire that a usage status parameter of the display device 1 is "used", and an unused display device 2 is successively allocated to the virtual machine 2, and by analogy, a display device 3 is allocated to a virtual machine 3, and a display device 4 is allocated to a virtual machine 4.

Step 206: The client device outputs, by invoking the bottom-layer driver, the virtual desktops of the M virtual machines to display devices separately selected for the M virtual machines, to display the virtual desktops.

With reference to FIG. 2B, the display processing module sends coordinate information of each allocated display device to the OS kernel driver according to the display devices allocated to the M virtual machines, and invokes a P2 interface to transmit the data of the virtual desktops to the OS kernel driver, outputs the virtual desktop of the virtual machine corresponding to each display device to the display device according to the coordinate information of the display device, and displays the virtual desktop according to a display resolution parameter of the display device.

As can be seen from the foregoing embodiment, when a client device is connected to N display devices, virtual desktops of M connected virtual machines may be separately mapped onto different display devices for display, thereby improving utilization of the client device, and meeting demands of a user when multiple virtual machines are used.

Refer to FIG. 3A, which is a flowchart of another embodiment of a method for mapping multiple virtual machines according to the present invention. This embodiment shows a mapping process between an external device connected to a client device and multiple virtual machines after virtual desktops of the foregoing multiple virtual machines are mapped onto multiple display screens.

Step 301: When a client device is connected to an external device, the client device separately acquires peripheral policies of M virtual machines, and acquires a type of the external device.

According to the embodiment shown in FIG. 1 or FIG. 2, after virtual desktops of the M virtual machines connected to the client device are separately mapped onto different display devices for display, when the client device is further connected to another external device, for example, an audio device such as a headset, or an interface device such as a USB flash drive, mapping needs to be performed between the external devices and virtual machines, and a virtual machine using the external device is determined.

In this embodiment, the interface device may include a parallel/serial interface device or a Universal Serial Bus (Universal Serial Bus, USB) interface device. The parallel/serial interface device is classified into a parallel interface device and a serial interface device, the parallel interface refers to an interface standard in which data is transmitted in a parallel transmission manner, and the serial interface refers to an interface standard in which data is transmitted in a serial communication manner.

In this embodiment, peripheral policies of different virtual machines may be prestored in the client device, for example, for any virtual machine, it may be set that external devices of all types may be mapped onto the virtual machine, or that an external device of a certain type cannot be mapped onto the virtual machine. Therefore, when the client device is connected to the external device, the client device acquires the type of the external device and the peripheral policies of the M connected virtual machines, so as to match a peripheral policy of each virtual machine with the type of the external device, and determine whether the external device may be mapped onto these virtual machines.

Step 302: Map the external device onto L virtual machines whose peripheral policies match the type of the external device.

In this embodiment, a peripheral policy matching the type of the external device is acquired according to a result of matching the peripheral policy of each virtual machine with the type of the external device, and the external device is mapped onto the L virtual machines corresponding to these peripheral policies, where L is a natural number that is not less than 1 and not greater than M.

Step 303: Allocate a right of use of the external device to at least one virtual machine in the L mapped virtual machines according to the type of the external device.

In this embodiment, when the type of the external device is an audio device, the client device may allocate the right of use of the external device to one virtual machine currently operated by a user by using the client device. For example, when the client device is connected to a headset and the headset is mapped onto multiple virtual machines, the client device may acquire a virtual machine currently controlled by mouse coordinates, that is, a virtual machine corresponding to a display device at which the mouse coordinates are currently located. The virtual machine is a virtual machine currently activated by a client, and then the client device releases an audio output right of the headset to the virtual machine, and another virtual machine cannot output an audio signal.

In this embodiment, when the type of the external device is an interface device, the client device may allocate, by means of token negotiation, the right of use of the external device to one virtual machine requesting the external device. For example, when the client device is connected to a USB flash drive and the USB flash drive is mapped onto multiple virtual machines, if the multiple virtual machines demand to write data to the USB flash drive, the multiple virtual machines send a token request to the client device, the client device allocates a token to one virtual machine at a time according to a token request sending order. After completing writing data to the USB flash drive, the virtual machine returns the token to the client device. Then, the client device allocates the token to a next virtual machine, until all the virtual machines write data to the USB flash drive, and the token negotiation process ends.

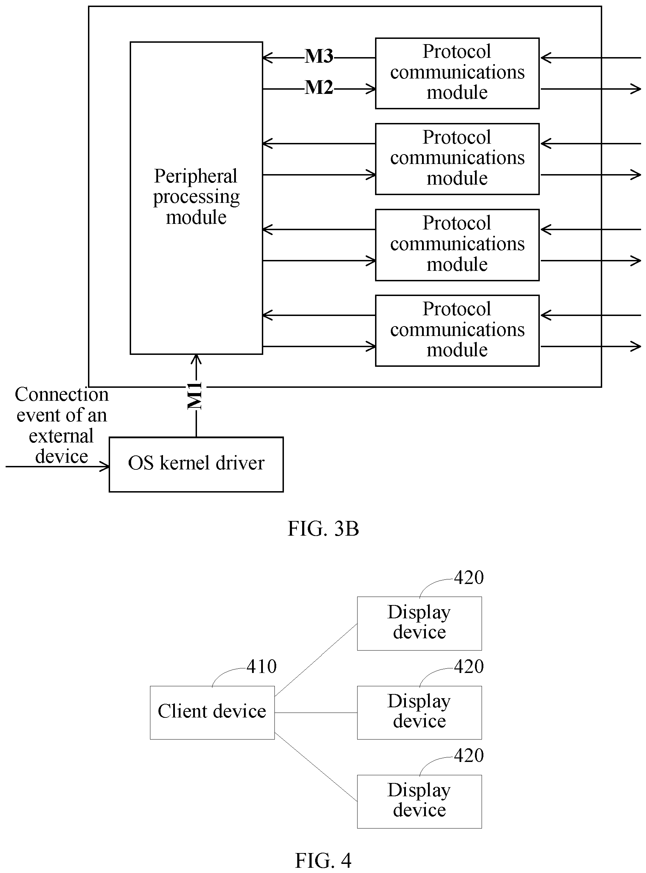

Refer to FIG. 3B, which is a schematic diagram of internal logic of a client device implementing the embodiment in FIG. 3A. The client device includes an OS kernel driver, a peripheral processing module, and a protocol communications module. An M1 interface is set between the OS kernel driver and the peripheral processing module, and the peripheral processing module interacts with the protocol communications module separately by using an M2 interface and an M3 interface. In a practical application, functions of the peripheral processing module and the protocol communications module in FIG. 3B may be integrated into one chip, and the OS kernel driver may be stored in a memory of the client device; or, a display processing module, the protocol communications module, and the OS kernel driver are all integrated into one chip.

The protocol communications module may receive a peripheral policy pushed by a connected virtual machine, and send the peripheral policy to the peripheral processing module; after detecting an event that an external device is connected into the client device, the OS kernel driver reports the event and a type of the external device to the peripheral processing module through the M1 interface; the peripheral processing module maps, according to a peripheral policy of each virtual machine, the external device onto a virtual machine matching the peripheral policy, where it may be ensured according to setting of a peripheral policy that a certain virtual machine can exclusively occupy an external device of a certain type.

As can be seen from the foregoing embodiment of the present invention, when a client device is connected to multiple display devices, virtual desktops of multiple connected virtual machines may be separately mapped onto different display devices for display, thereby improving utilization of the client device, and meeting demands of a user when multiple virtual machines are used. In addition, when the client device is connected to an external device, the external device may also be mapped onto the multiple connected virtual machines, and a right of use of the external device is allocated to a virtual machine according to policy control, thereby improving flexibility of mapping of the multiple virtual machines.

Corresponding to the embodiment of the method for mapping multiple virtual machines according to the present invention, the present invention further provides embodiments of a system for mapping multiple virtual machines, and a client device.

Refer to FIG. 4, which is a block diagram of an embodiment of a system for mapping multiple virtual machines according to the present invention.

The system includes: a client device 410, and N display devices 420 connected to the client device 410. For ease of illustration, FIG. 4 shows three display devices 420.

The client device 410 is configured to: separately acquire display parameters of the N display devices 420; when the client device is connected to M virtual machines, separately receive virtual desktops pushed by the M virtual machines; separately select, according to the display parameters of the N display devices, display devices for the M virtual machines from the N display devices 420; and output the virtual desktops of the M virtual machines to the display devices 420 separately selected for the M virtual machines, where N is not less than M, N and M are both natural numbers, and M is not less than 2.

The display devices 420 separately selected for the M virtual machines are separately configured to display the virtual desktops of the M virtual machines output by the client device 410.

Optionally, the client device 410 may be further configured to: when the client device 410 is connected to an external device, separately acquire peripheral policies of the M virtual machines, and acquire a type of the external device; map the external device onto L virtual machines whose peripheral policies match the type of the external device, where L is a natural number, and L is not less than 1 and not greater than M; and allocate a right of use of the external device to at least one of the L mapped virtual machines according to the type of the external device.

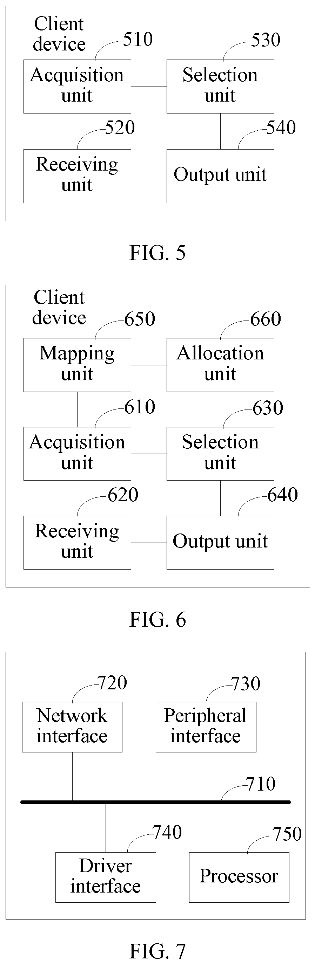

For a specific structure embodiment of the foregoing client device, reference may be made to embodiments shown in subsequent FIG. 5 and FIG. 6, and details are not described herein again.

Refer to FIG. 5, which is a block diagram of an embodiment of a client device according to the present invention.

The client device includes: an acquisition unit 510, a receiving unit 520, a selection unit 530, and an output unit 540, where
the acquisition unit 510 is configured to separately acquire display parameters of N connected display devices;
the receiving unit 520 is configured to: when the client device is connected to M virtual machines, separately receive virtual desktops pushed by the M virtual machines;
the selection unit 530 is configured to separately select display devices for the M virtual machines from the N display devices according to the display parameters of the N display devices acquired by the acquisition unit 510; and
the output unit 540 is configured to output the virtual desktops of the M virtual machines received by the receiving unit 520 to the display devices separately selected by the selection unit 530 for the M virtual machines, to display the virtual desktops, where N is not less than M, N and M are both natural numbers, and M is not less than 2.

Optionally, the acquisition unit 510 may be specifically configured to separately acquire the display parameters of the N display devices by invoking a bottom-layer driver, where the display parameters include usage status parameters of the display devices; and
the output unit 540 may be specifically configured to output, by invoking the bottom-layer driver, the virtual desktops of the M virtual machines to the display devices separately selected for the M virtual machines, to display the virtual desktops.

Optionally, the receiving unit 520 may include the following subunits (not shown in FIG. 5):
a channel establishing subunit, configured to establish desktop protocol channels between the client device and the M virtual machines; and
a desktop receiving subunit, configured to separately receive the virtual desktops that are transmitted by the M virtual machines through the desktop protocol channels established by the channel establishing subunit.

Optionally, the selection unit 530 may include the following subunits (not shown in FIG. 5):
a status checking subunit, configured to: when a new virtual machine is connected, check the usage status parameters in the display parameters of the N display devices according to an order in which the M virtual machines are connected; and
a device allocating subunit, configured to allocate a display device whose usage status parameter is "unused" in the N display devices to the newly connected virtual machine according to usage statuses of the display devices checked by the status checking subunit.

Refer to FIG. 6, which is a block diagram of another embodiment of a client device according to the present invention.

The client device includes: an acquisition unit 610, a receiving unit 620, a selection unit 630, an output unit 640, a mapping unit 650, and an allocation unit 660, where
the acquisition unit 610 is configured to separately acquire display parameters of N connected display devices;
the receiving unit 620 is configured to: when the client device is connected to M virtual machines, separately receive virtual desktops pushed by the M virtual machines;
the selection unit 630 is configured to separately select display devices for the M virtual machines from the N display devices according to the display parameters of the N display devices acquired by the acquisition unit 620;
the output unit 640 is configured to output the virtual desktops of the M virtual machines received by the receiving unit 620 to the display devices separately selected by the selection unit 630 for the M virtual machines, to display the virtual desktops, where N is not less than M, N and M are both natural numbers, and M is not less than 2;
the acquisition unit 610 is further configured to: when the client device is connected to an external device, separately acquire peripheral policies of the M virtual machines, and acquire a type of the external device;
the mapping unit 650 is configured to map the external device onto L virtual machines whose peripheral policies match the type of the external device, where L is a natural number, and L is not less than 1 and not greater than M; and
the allocation unit 660 is configured to allocate, according to the type of the external device, a right of use of the external device to at least one virtual machine in the L virtual machines mapped by the mapping unit 650.

Optionally, the acquisition unit 610 may be specifically configured to separately acquire the display parameters of the N display devices by invoking a bottom-layer driver, where the display parameters include usage status parameters of the display devices; and
the output unit 640 may be specifically configured to output, by invoking the bottom-layer driver, the virtual desktops of the M virtual machines to the display devices separately selected for the M virtual machines, to display the virtual desktops.

Optionally, the receiving unit 620 may include the following subunits (not shown in FIG. 6):
a channel establishing subunit, configured to establish desktop protocol channels between the client device and the M virtual machines; and
a desktop receiving subunit, configured to separately receive the virtual desktops that are transmitted by the M virtual machines through the desktop protocol channels established by the channel establishing subunit.

Optionally, the selection unit 630 may include the following subunits (not shown in FIG. 6):
a status checking subunit, configured to: when a new virtual machine is connected, check the usage status parameters in the display parameters of the N display devices according to an order in which the M virtual machines are connected; and
a device allocating subunit, configured to allocate a display device whose usage status parameter is "unused" in the N display devices to the newly connected virtual machine according to usage statuses of the display devices checked by the status checking subunit.

Optionally, the allocation unit 660 may include at least one of the following units (not shown in FIG. 6):
a first allocation subunit, configured to: when the type of the external device is an audio device, allocate a right of use of the audio device to one virtual machine in the L virtual machines, where the virtual machine acquiring the right of use of the audio device is a virtual machine currently operated by a user by using the client device; and
a second allocation subunit, configured to: when the type of the external device is an interface device, allocate a right of use of the interface device to one virtual machine in the L virtual machines by means of token negotiation, where the virtual machine acquiring the right of use of the interface device is a virtual machine requesting the interface device, and the interface device is a parallel/serial interface device or a Universal Serial Bus USB interface device.

Refer to FIG. 7, which is a block diagram of another embodiment of a client device according to the present invention.

The client device includes: a bus 710, and a network interface 720, a peripheral interface 730, a driver interface 740, and a processor 750 that are connected by using the bus 710, where
the peripheral interface 730 is configured to connect to N display devices;
the network interface 720 is configured to connect to M virtual machines; and
the processor 750 is configured to: separately acquire display parameters of the N display devices; separately receive virtual desktops pushed by the M virtual machines; separately select, according to the display parameters of the N display devices, display devices for the M virtual machines from the N display devices; and output, through the driver interface 740, the virtual desktops of the M virtual machines to the display devices separately selected for the M virtual machines, to display the virtual desktops, where N is not less than M, N and M are both natural numbers, and M is not less than 2.

Further, the peripheral interface 730 is further configured to connect to an external device;
the driver interface 740 is further configured to report a connection event of the external device to the processor; and
the processor 750 is further configured to: separately acquire peripheral policies of the M virtual machines according to the connection event reported by the driver interface 740, and acquire a type of the external device connected to the peripheral interface 730; map the external device onto L virtual machines whose peripheral policies match the type of the external device, where L is a natural number, and L is not less than 1 and not greater than M; and allocate a right of use of the external device to at least one virtual machine of the L mapped virtual machines according to the type of the external device.

Optionally, the processor 750 may be specifically configured to: separately acquire the display parameters of the N display devices by invoking a bottom-layer driver by using the driver interface 740, where the display parameters include usage status parameters of the display devices; and output, by invoking the bottom-layer driver by using the driver interface 740, the virtual desktops of the M virtual machines to the display devices separately selected for the M virtual machines, to display the virtual desktops.

Optionally, the processor 750 may be specifically configured to establish desktop protocol channels between the client device and the M virtual machines by using the network interface 720, and separately receive the virtual desktops that are transmitted by the M virtual machines through the established desktop protocol channels.

Optionally, the processor 750 may be specifically configured to: when a new virtual machine is connected, check the usage status parameters in the display parameters of the N display devices according to an order in which the M virtual machines are connected; and allocate a display device whose usage status parameter is "unused" in the N display devices to the newly connected virtual machine.

Optionally, the processor 750 may be specifically configured to: when the type of the external device is an audio device, allocate a right of use of the audio device to one virtual machine in the L virtual machines, where the virtual machine acquiring the right of use of the audio device is a virtual machine currently operated by a user by using the client device; or when the type of the external device is an interface device, allocate a right of use of the interface device to one virtual machine in the L virtual machines by means of token negotiation, where the virtual machine acquiring the right of use of the interface device is a virtual machine requesting the interface device, and the interface device is a parallel/serial interface device or a Universal Serial Bus USB interface device.

As can be seem from the foregoing embodiment, a client device may separately acquire display parameters of N connected display devices; when the client device is connected to M virtual machines, separately receive virtual desktops pushed by the M virtual machines; separately select, according to the display parameters of the N display devices, display devices for the M virtual machines from the N display devices; and output the virtual desktops of the M virtual machines to the display devices separately selected for the M virtual machines, to display the virtual desktops, where N and M are both natural numbers, N is not less than M, and M is not less than 2. By using this embodiment of the present invention, when the client device is connected to multiple display devices, virtual desktops of multiple connected virtual machines may be separately mapped onto different display devices for display, thereby improving utilization of the client device, and meeting demands of a user when multiple virtual machines are used. In addition, when the client device is connected to an external device, the external device may also be mapped onto the multiple connected virtual machines, and a right of use of the external device is allocated to a virtual machine according to policy control, thereby improving flexibility of mapping of the multiple virtual machines.

A person skilled in the art may clearly understand that, the technologies in the embodiments of the present invention may be implemented by software in addition to a necessary general hardware platform. Based on such an understanding, the technical solutions in the embodiments of the present invention essentially or the part contributing to the prior art may be implemented in a form of a software product. The software product can be stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention.

## Claims

1. A method for mapping multiple virtual machines, wherein the method comprises:
separately acquiring (101), by a client device, display parameters of N connected display devices;
when the client device is connected to M virtual machines, separately receiving (102), by the client device, virtual desktops pushed by the M virtual machines;
separately selecting (103), by the client device according to the display parameters of the N display devices, display devices for the M virtual machines from the N display devices; and
outputting (104), by the client device, the virtual desktops of the M virtual machines to the display devices separately selected for the M virtual machines, to display the virtual desktops, wherein N is not less than M, N and M are both natural numbers, and M is not less than 2;
**characterised in that** :
when the client device is connected to an external device, separately acquiring peripheral policies of the M virtual machines, and acquiring a type of the external device (301);
mapping (302) the external device onto L virtual machines whose peripheral policies match the type of the external device, wherein L is a natural number, and L is not less than 1 and not greater than M; and
allocating (303) a right of use of the external device to at least one virtual machine in the L mapped virtual machines according to the type of the external device;
wherein the allocating a right of use of the external device to at least one virtual machine in the L mapped virtual machines according to the type of the external device specifically comprises:
when the type of the external device is an audio device, allocating a right of use of the audio device to one virtual machine in the L virtual machines, wherein the virtual machine acquiring the right of use of the audio device is a virtual machine currently operated by a user by using the client device; and
when the type of the external device is an interface device, allocating a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus,USB, interface device.

2. The method according to claim 1, wherein
the separately acquiring (101), by a client device, display parameters of N connected display devices specifically comprises: separately acquiring (201), by the client device, the display parameters of the N display devices by invoking a driver, wherein the display parameters comprise
usage status parameters of the display devices; and
the outputting (104), by the client device, the virtual desktops of the M virtual machines to the display devices separately selected for the M virtual machines, to display the virtual desktops specifically comprises: outputting (206), by the client device by invoking the driver, the virtual desktops of the M virtual machines to the display devices separately selected for the M virtual machines, to display the virtual desktops.

3. The method according to claim 1 or 2, wherein the separately receiving (102), by the client device, virtual desktops pushed by the M virtual machines specifically comprises:
Establishing (202) desktop protocol channels between the client device and the M virtual machines; and
separately receiving (203) the virtual desktops that are transmitted by the M virtual machines through the established desktop protocol channels.

4. The method according to any one of claims 1 to 3, wherein the separately selecting (103), by the client device according to the display parameters of the N display devices, display devices for the M virtual machines from the N display devices specifically comprises:
when a new virtual machine is connected, checking (204), by the client device, the usage status parameters in the display parameters of the N display devices according to an order in which the M virtual machines are connected; and
allocating (205) a display device whose usage status parameter is "unused" in the N display devices to the newly connected virtual machine.

5. A system for mapping multiple virtual machines, wherein the system comprises: a client device (410) and N display devices (420) connected to the client device (410), wherein
the client device (410) is configured to: separately acquire display parameters of the N display devices (420); when the client device (410) is connected to M virtual machines, separately receive virtual desktops pushed by the M virtual machines; separately select, according to the display parameters of the N display devices (420), display devices for the M virtual machines from the N display devices (420); and output the virtual desktops of the M virtual machines to the display devices separately selected for the M virtual machines, wherein N is not less than M, N and M are both natural numbers, and M is not less than 2; and
the display devices separately selected for the M virtual machines are separately configured to display the virtual desktops of the M virtual machines output by the client device (410);
**characterised in that**
the client device (410) is further configured to: when the client device (410) is connected to an external device, separately acquire peripheral policies of the M virtual machines, and acquire a type of the external device; map the external device onto L virtual machines whose peripheral policies
match the type of the external device, wherein L is a natural number, and L is not less than 1 and not greater than M; and allocate a right of use of the external device to at least one of the L mapped virtual machines according to the type of the external device;
wherein the allocate a right of use of the external device to at least one virtual machine in the L mapped virtual machines according to the type of the external device specifically comprises:
when the type of the external device is an audio device, allocating a right of use of the audio device to one virtual machine in the L virtual machines, wherein the virtual machine acquiring the right of use of the audio device is a virtual machine currently operated by a user by using the client device; and
when the type of the external device is an interface device, allocating a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus,USB, interface device.

6. A client device, wherein the client device comprises:
an acquisition unit (610), configured to separately acquire display parameters of N connected display devices;
a receiving unit (620), configured to: when the client device is connected to M virtual machines, separately receive virtual desktops pushed by the M virtual machines;
a selection unit (630), configured to separately select display devices for the M virtual machines from the N display devices according to the display parameters of the N display devices acquired by the acquisition unit (610); and
an output unit (640), configured to output the virtual desktops of the M virtual machines received by the receiving unit (620) to the display devices separately selected by the selection unit (630) for the M virtual machines, to display the virtual desktops, wherein N is not less than M, N and M are both natural numbers, and M is not less than 2;
**characterised in that**
the acquisition unit (610) is further configured to: when the client device is connected to an external device, separately acquire peripheral policies of the M virtual machines, and acquire a type of the external device; and
the client device further comprises:
a mapping unit (6500), configured to map the external device onto L virtual machines whose peripheral policies match the type of the external device, wherein L is a natural number, and L is not less than 1 and not greater than M; and
an allocation unit (660), configured to allocate, according to the type of the external device, a right of use of the external device to at least one virtual machine in the L virtual machines mapped by the mapping unit (650);
wherein the allocation unit (660) comprises at least one of the following units:
a first allocation subunit, configured to: when the type of the external device is an audio device, allocate a right of use of the audio device to one virtual machine in the L virtual machines, wherein the virtual machine acquiring the right of use of the audio device is a virtual machine currently operated by a user by using the client device; and
a second allocation subunit, configured to: when the type of the external device is an interface device, allocate a right of use of the interface device to one virtual machine in the L virtual machines by means of token negotiation, wherein the virtual machine acquiring the right of use of the interface device is a virtual machine requesting the interface device, and the interface device is a parallel/serial interface device or a Universal Serial Bus USB interface device.

7. The client device according to claim 6, wherein
the acquisition unit (610) is specifically configured to separately acquire the display parameters of the N display devices by invoking a driver, wherein the display parameters comprise usage status parameters of the display devices; and
the output unit (640) is specifically configured to output, by invoking the driver, the virtual desktops of the M virtual machines to the display devices separately selected for the M virtual machines, to display the virtual desktops.

8. The client device according to claim 6 or 7, wherein the receiving unit (620) comprises:
a channel establishing subunit, configured to establish desktop protocol channels between the client device and the M virtual machines; and
a desktop receiving subunit, configured to separately receive the virtual desktops that are transmitted by the M virtual machines through the desktop protocol channels established by the channel establishing subunit.

9. The client device according to any one of claims 6 to 8, wherein the selection unit (630) comprises:
a status checking subunit, configured to: when a new virtual machine is connected, check the usage status parameters in the display parameters of the N display devices according to an order in which the M virtual machines are connected; and
a device allocating subunit, configured to allocate a display device whose usage status parameter is "unused" in the N display devices to the newly connected virtual machine according to usage statuses of the display devices checked by the status checking subunit.

## Patentansprüche

1. Verfahren zum Abbilden von mehreren virtuellen Maschinen, wobei das Verfahren umfasst:
separates Erfassen (101) von Anzeigeparametern von N angeschlossenen Anzeigevorrichtungen durch eine Client-Vorrichtung;
wenn die Client-Vorrichtung mit M virtuellen Maschinen verbunden ist, separates Empfangen (102) virtueller Desktops, die von den M virtuellen Maschinen angetrieben werden, durch die Client-Vorrichtung;
separates Auswählen (103) von Anzeigevorrichtungen für die M virtuellen Maschinen aus den N Anzeigevorrichtungen durch die Client-Vorrichtung gemäß den Anzeigeparametern der N Anzeigevorrichtungen; und
Ausgeben (104) der virtuellen Desktops der M virtuellen Maschinen durch die Client-Vorrichtung an die Anzeigevorrichtungen, die für die M virtuellen Maschinen separat ausgewählt wurden, um die virtuellen Desktops anzuzeigen, wobei N nicht kleiner als M ist, sowohl N als auch M natürliche Zahlen sind und M nicht kleiner als 2 ist;
**gekennzeichnet durch**:
wenn die Client-Vorrichtung mit einer externen Vorrichtung verbunden ist, separates Erfassen peripherer Richtlinien der M virtuellen Maschinen und Erfassen eines Typs der externen Vorrichtung (301);
Abbilden (302) der externen Vorrichtung auf L virtuelle Maschinen, deren periphere Richtlinien mit dem Typ der externen Vorrichtung übereinstimmen, wobei L eine natürliche Zahl ist und wobei L nicht kleiner als 1 und nicht größer als M ist; und
Zuteilen (303) eines Rechts auf Verwendung der externen Vorrichtung an mindestens eine virtuelle Maschine aus den L abgebildeten virtuellen Maschinen gemäß dem Typ der externen Vorrichtung;
wobei das Zuteilen eines Rechts auf Verwendung der externen Vorrichtung an mindestens eine virtuelle Maschine aus den L abgebildeten virtuellen Maschinen gemäß dem Typ der externen Vorrichtung insbesondere umfasst:
wenn der Typ der externen Vorrichtung eine Audiovorrichtung ist, Zuteilen eines Rechts auf Verwendung der Audiovorrichtung an eine virtuelle Maschine aus den L abgebildeten virtuellen Maschinen, wobei die virtuelle Maschine, die das Recht auf Verwendung der Audiovorrichtung erwirbt, eine virtuelle Maschine ist, die aktuell von einem Benutzer betrieben wird, indem er die Client-Vorrichtung verwendet; und wenn der Typ der externen Vorrichtung eine Schnittstellenvorrichtung ist, Zuteilen eines Rechts auf Verwendung der Schnittstellenvorrichtung mittels einer Token-Verhandlung an eine virtuelle Maschine aus den L abgebildeten virtuellen Maschinen, wobei die virtuelle Maschine, die das Recht auf Verwendung der Schnittstellenvorrichtung erwirbt, eine virtuelle Maschine ist, welche die Schnittstellenvorrichtung anfordert und wobei die Schnittstellenvorrichtung eine parallele/serielle Schnittstellenvorrichtung oder eine Schnittstellenvorrichtung mit einem universellen seriellen Bus (Universal Serial Bus interface device, USB-Schnittstellenvorrichtung) ist.

2. Verfahren nach Anspruch 1, wobei
das separate Erfassen (101) von Anzeigeparametern von N angeschlossenen Anzeigevorrichtungen durch eine Client-Vorrichtung insbesondere umfasst: separates Erfassen (201) der Anzeigeparameter der N angeschlossenen Anzeigevorrichtungen durch die Client-Vorrichtung, indem ein Treiber aufgerufen wird, wobei die Anzeigeparameter Nutzungszustandsparameter der Anzeigevorrichtungen umfassen;
und
wobei das Ausgeben (104) der virtuellen Desktops der M virtuellen Maschinen durch die Client-Vorrichtung an die Anzeigevorrichtungen, die für die M virtuellen Maschinen separat ausgewählt wurden, um die virtuellen Desktops anzuzeigen, insbesondere umfasst: Ausgeben (206) der virtuellen Desktops der M virtuellen Maschinen von der Client-Vorrichtung an die Anzeigevorrichtungen, die für die M virtuellen Maschinen separat ausgewählt wurden, um die virtuellen Desktops anzuzeigen, indem der Treiber aufgerufen wird.

3. Verfahren nach Anspruch 1 oder 2, wobei das separate Empfangen (102) virtueller Desktops, die von den M virtuellen Maschinen angetrieben werden, durch die Client-Vorrichtung insbesondere umfasst:
Einrichten (202) von Desktop-Protokollkanälen zwischen der Client-Vorrichtung und den M virtuellen Maschinen; und
separates Empfangen (203) der virtuellen Desktops, die von den M virtuellen Maschinen durch die eingerichteten Desktop-Protokollkanäle übertragen werden.

4. Verfahren nach einem der Ansprüche 1 bis 3, wobei das separate Auswählen (103) von Anzeigevorrichtungen für die M virtuellen Maschinen aus den N Anzeigevorrichtungen durch die Client-Vorrichtung gemäß den Anzeigeparametern der N Anzeigevorrichtungen insbesondere umfasst:
wenn eine neue virtuelle Maschine angeschlossen wird, Prüfen (204) der Nutzungszustandsparameter in den Anzeigeparametern der N Anzeigevorrichtungen durch die Client-Vorrichtung gemäß einer Reihenfolge, in der die M virtuellen Maschinen angeschlossen sind, und
Zuteilen (205) einer Anzeigevorrichtung, deren Nutzungszustandsparameter in den N Anzeigevorrichtungen "nicht verwendet" ist, an die neu angeschlossene virtuelle Maschine.

5. System zum Abbilden von mehreren virtuellen Maschinen, wobei das System umfasst: eine Client-Vorrichtung (410) und N Anzeigevorrichtungen (420), die mit der Client-Vorrichtung (410) verbunden sind, wobei
die Client-Vorrichtung Host (410) konfiguriert ist zum: separaten Erfassen von Anzeigeparametern der N Anzeigevorrichtungen (420); wenn die Client-Vorrichtung (410) mit M virtuellen Maschinen verbunden ist, separates Empfangen virtueller Desktops, die von den M virtuellen Maschinen angetrieben werden; separates Auswählen von Anzeigevorrichtungen für die M virtuellen Maschinen aus den N Anzeigevorrichtungen (420) gemäß den Anzeigeparametern der N Anzeigevorrichtungen (420); und Ausgeben der virtuellen Desktops der M virtuellen Maschinen an die Anzeigevorrichtungen, die für die M virtuellen Maschinen separat ausgewählt wurden, wobei N nicht kleiner als M ist, sowohl N als auch M natürliche Zahlen sind und M nicht kleiner als 2 ist; und
die Anzeigevorrichtungen, die für die M virtuellen Maschinen separat ausgewählt wurden, separat konfiguriert sind, um die virtuellen Desktops der M virtuellen Maschinen anzuzeigen, die von der Client-Vorrichtung (410) ausgegeben wurden; **dadurch gekennzeichnet, dass**
die Client-Vorrichtung (410) außerdem konfiguriert ist zum: wenn die Client-Vorrichtung (410) mit einer externen Vorrichtung verbunden ist, separaten Erfassen peripherer Richtlinien der M virtuellen Maschinen und Erfassen eines Typs der externen Vorrichtung; Abbilden der externen Vorrichtung auf L virtuelle Maschinen, deren periphere Richtlinien mit dem Typ der externen Vorrichtung übereinstimmen, wobei L eine natürliche Zahl ist und wobei L nicht kleiner als 1 und nicht größer als M ist; und Zuteilen eines Rechts auf Verwendung der externen Vorrichtung an mindestens eine der L abgebildeten virtuellen Maschinen gemäß dem Typ der externen Vorrichtung;
wobei das Zuteilen eines Rechts auf Verwendung der externen Vorrichtung an mindestens eine virtuelle Maschine aus den L abgebildeten virtuellen Maschinen gemäß dem Typ der externen Vorrichtung insbesondere umfasst:
wenn der Typ der externen Vorrichtung eine Audiovorrichtung ist, Zuteilen eines Rechts auf Verwendung der Audiovorrichtung an eine virtuelle Maschine aus den L abgebildeten virtuellen Maschinen, wobei die virtuelle Maschine, die das Recht auf Verwendung der Audiovorrichtung erwirbt, eine virtuelle Maschine ist, die aktuell von einem Benutzer betrieben wird, indem er die Client-Vorrichtung verwendet; und
wenn der Typ der externen Vorrichtung eine Schnittstellenvorrichtung ist, Zuteilen eines Rechts auf Verwendung der Schnittstellenvorrichtung mittels einer Token-Verhandlung an eine virtuelle Maschine aus den L abgebildeten virtuellen Maschinen, wobei die virtuelle Maschine, die das Recht auf Verwendung der Schnittstellenvorrichtung erwirbt, eine virtuelle Maschine ist, welche die Schnittstellenvorrichtung anfordert und wobei die Schnittstellenvorrichtung eine parallele/serielle Schnittstellenvorrichtung oder eine Schnittstellenvorrichtung mit einem universellen seriellen Bus (Universal Serial Bus interface device, USB-Schnittstellenvorrichtung) ist.

6. Client-Vorrichtung, wobei die Client-Vorrichtung umfasst:
eine Erfassungseinheit (610), die konfiguriert ist, um Anzeigeparameter von N angeschlossenen Anzeigevorrichtungen separat zu erfassen;
eine Empfangseinheit (620), die konfiguriert ist zum: wenn die Client-Vorrichtung mit M virtuellen Maschinen verbunden ist, separaten Empfangen virtueller Desktops, die von den M virtuellen Maschinen angetrieben werden;
eine Auswahleinheit (630), die konfiguriert ist, Anzeigevorrichtungen für die M virtuellen Maschinen aus den N Anzeigevorrichtungen gemäß den Anzeigeparametern der N Anzeigevorrichtungen separat auszuwählen, die von der Erfassungseinheit (610) erfasst wurden; und
eine Ausgabeeinheit (640), die konfiguriert ist zum Ausgeben der virtuellen Desktops der M virtuellen Maschinen, die von der Empfangseinheit (620) empfangen wurden, an die Anzeigevorrichtungen, die von der Auswahleinheit (630) für die M virtuellen Maschinen separat ausgewählt wurden, um die virtuellen Desktops anzuzeigen, wobei N nicht kleiner als M ist, sowohl N als auch M natürliche Zahlen sind und M nicht kleiner als 2 ist;
**dadurch gekennzeichnet, dass**,
die Erfassungseinheit (610) außerdem konfiguriert ist zum: wenn die Client-Vorrichtung mit einer externen Vorrichtung verbunden ist, separaten Erfassen peripherer Richtlinien der M virtuellen Maschinen und Erfassen eines Typs der externen Vorrichtung; und
die Client-Vorrichtung außerdem umfasst:
eine Abbildungseinheit (6500), die konfiguriert ist zum Abbilden der externen Vorrichtung auf L virtuelle Maschinen, deren periphere Richtlinien mit dem Typ der externen Vorrichtung übereinstimmen, wobei L eine natürliche Zahl ist und wobei L nicht kleiner als 1 und nicht größer als M ist; und
eine Zuteilungseinheit (660), die konfiguriert ist zum Zuteilen eines Rechts auf Verwendung der externen Vorrichtung gemäß dem Typ der externen Vorrichtung an mindestens eine virtuelle Maschine aus den L virtuellen Maschinen, die von der Abbildungseinheit (650) abgebildet wurden;
wobei die Zuteilungseinheit (660) mindestens eine der folgenden Einheiten umfasst:
eine erste Zuteilungsteileinheit, die konfiguriert ist zum: wenn der Typ der externen Vorrichtung eine Audiovorrichtung ist, Zuteilen eines Rechts auf Verwendung der Audiovorrichtung an eine virtuelle Maschine aus den L virtuellen Maschinen, wobei die virtuelle Maschine, die das Recht auf Verwendung der Audiovorrichtung erwirbt,
eine virtuelle Maschine ist, die aktuell von einem Benutzer betrieben wird, indem er die Client-Vorrichtung verwendet; und
eine zweite Zuteilungsteileinheit, die konfiguriert ist zum: wenn der Typ der externen Vorrichtung eine Schnittstellenvorrichtung ist, Zuteilen eines Rechts auf Verwendung der Schnittstellenvorrichtung mittels einer Token-Verhandlung an eine virtuelle Maschine aus den L abgebildeten virtuellen Maschinen, wobei die virtuelle Maschine, die das Recht auf Verwendung der Schnittstellenvorrichtung erwirbt, eine virtuelle Maschine ist, welche die Schnittstellenvorrichtung anfordert und wobei die Schnittstellenvorrichtung eine parallele/serielle Schnittstellenvorrichtung oder eine Schnittstellenvorrichtung mit einem universellen seriellen Bus (Universal Serial Bus interface device, USB-Schnittstellenvorrichtung) ist.

7. Client-Vorrichtung nach Anspruch 6, wobei
die Erfassungseinheit (610) insbesondere konfiguriert ist zum separaten Erfassen der Anzeigeparameter von N angeschlossenen Anzeigevorrichtungen durch ein Aufrufen eines Treibers, wobei die Anzeigeparameter Nutzungszustandsparameter der Anzeigevorrichtungen umfassen; und
die Ausgabeeinheit (640) insbesondere konfiguriert ist zum Ausgeben der virtuellen Desktops der M virtuellen Maschinen an die Anzeigevorrichtungen, die für die M virtuellen Maschinen separat ausgewählt wurden, um die virtuellen Desktops anzuzeigen, indem der Treiber aufgerufen wird.

8. Client-Vorrichtung nach Anspruch 6 oder 7, wobei die Empfangseinheit (620) umfasst:
eine Teileinheit zum Einrichten eines Kanals, die konfiguriert ist zum Einrichten von Desktop-Protokollkanälen zwischen der Client-Vorrichtung und den M virtuellen Maschinen; und
eine Teileinheit zum Empfangen der Desktops, die konfiguriert ist zum separaten Empfangen der virtuellen Desktops, die von den M virtuellen Maschinen durch die von der Teileinheit zum Einrichten eines Kanals eingerichteten Desktop-Protokollkanäle übertragen werden.

9. Client-Vorrichtung nach einem der Ansprüche 6 bis 8, wobei die Client-Vorrichtung (630) umfasst:
eine Zustandsprüfungsteileinheit, die konfiguriert ist zum: wenn eine neue virtuelle Maschine angeschlossen wird, Prüfen der Nutzungszustandsparameter in den Anzeigeparametern der N Anzeigevorrichtungen gemäß einer Reihenfolge, in der die M virtuellen Maschinen angeschlossen sind, und
eine Vorrichtungszuteilungsteileinheit, die konfiguriert ist zum Zuteilen einer Anzeigevorrichtung, deren Nutzungszustandsparameter in den N Anzeigevorrichtungen "nicht verwendet" ist, an die neu angeschlossene virtuelle Maschine, gemäß den Nutzungszuständen der Anzeigevorrichtungen, die von der Zustandsprüfungsteileinheit geprüft wurden.

## Revendications

1. Procédé de mappage de multiples machines virtuelles, le procédé comprenant :
l'acquisition séparée (101), par un dispositif client, de paramètres d'affichage de N dispositifs d'affichage connectés ;
quand le dispositif client est connecté à M machines virtuelles, la réception séparée (102), par le dispositif client, de bureaux virtuels poussés par les M machines virtuelles ;
la sélection séparée (103), par le dispositif client conformément aux paramètres d'affichage des N dispositifs d'affichage, de dispositifs d'affichage pour les M machines virtuelles parmi les N dispositifs d'affichage ; et
la production en sortie (104), par le dispositif client, des bureaux virtuels des M machines virtuelles vers les dispositifs d'affichage sélectionnés séparément pour les M machines virtuelles, afin d'afficher les bureaux virtuels, dans lequel N n'est pas inférieur à M, N et M sont tous les deux des nombres naturels, et M n'est pas inférieur à 2 ;
**caractérisé par** :
quand le dispositif client est connecté à un dispositif externe, l'acquisition séparée de stratégies périphériques des M machines virtuelles, et l'acquisition d'un type du dispositif externe (301) ;
le mappage (302) du dispositif externe sur L machines virtuelles dont les stratégies périphériques correspondent au type du dispositif externe, dans lequel L est un nombre naturel, et L n'est ni inférieur à 1, ni supérieur à M ; et
l'attribution (303) d'un droit d'utilisation du dispositif externe à au moins une machine virtuelle dans les L machines virtuelles mappées conformément au type du dispositif externe ;
dans lequel l'attribution d'un droit d'utilisation du dispositif externe à au moins une machine virtuelle dans les L machines virtuelles mappées conformément au type du dispositif externe comprend spécifiquement :
quand le type du dispositif externe est un dispositif audio, l'attribution d'un droit d'utilisation du dispositif audio à une machine virtuelle dans les L machines virtuelles, dans lequel la machine virtuelle acquérant le droit d'utilisation du dispositif audio est une machine virtuelle présentement exploitée par un utilisateur qui utilise le dispositif client ; et
quand le type du dispositif externe est un dispositif d'interface, l'attribution d'un droit d'utilisation du dispositif d'interface à une machine virtuelle dans les L machines virtuelles, par négociation de jeton, dans lequel la machine virtuelle acquérant le droit d'utilisation du dispositif d'interface est une machine virtuelle demandant le dispositif d'interface, et le dispositif d'interface est un dispositif d'interface parallèle/série ou un dispositif d'interface USB (bus série universel).

2. Procédé selon la revendication 1, dans lequel
l'acquisition séparée (101), par un dispositif client, de paramètres d'affichage de N dispositifs d'affichage connectés comprend spécifiquement : l'acquisition séparée (201), par le dispositif client, des paramètres d'affichage des N dispositifs d'affichage par appel d'un pilote, dans lequel les paramètres d'affichage comprennent des paramètres d'état d'utilisation des dispositifs d'affichage ; et
la production en sortie (104), par le dispositif client, des bureaux virtuels des M machines virtuelles vers les dispositifs d'affichage sélectionnés séparément pour les M machines virtuelles, afin d'afficher les bureaux virtuels comprend spécifiquement :
la production en sortie (206), par le dispositif client par appel du pilote, des bureaux virtuels des M machines virtuelles vers les dispositifs d'affichage sélectionnés séparément pour les M machines virtuelles, pour afficher les bureaux virtuels.

3. Procédé selon la revendication 1 ou 2, dans lequel la réception séparée (102), par le dispositif client, de bureaux virtuels poussés par les M machines virtuelles comprend spécifiquement :
l'établissement (202) de canaux de protocole de bureau entre le dispositif client et les M machines virtuelles ; et
la réception séparée (203) des bureaux virtuels qui sont transmis par les M machines virtuelles par le biais des canaux de protocole de bureau établis.

4. Procédé selon l'une quelconque des revendications 1 à 3, dans lequel la sélection séparée (103), par le dispositif client conformément aux paramètres d'affichage des N dispositifs d'affichage, des dispositifs d'affichage pour les M machines virtuelles parmi les N dispositifs d'affichage comprend spécifiquement :
quand une nouvelle machine virtuelle est connectée, la vérification (204), par le dispositif client, des paramètres d'état d'utilisation dans les paramètres d'affichage des N dispositifs d'affichage conformément à un ordre dans lequel les M machines virtuelles sont connectées ; et
l'attribution (205) d'un dispositif d'affichage dont le paramètre d'état d'utilisation est "inutilisé" dans les N dispositifs d'affichage à la machine virtuelle nouvellement connectée.

5. Système de mappage de multiples machines virtuelles, le système comprenant : un dispositif client (410) et N dispositifs d'affichage (420) connectés au dispositif client (410), dans lequel
le dispositif client (410) est configuré pour : acquérir séparément des paramètres d'affichage des N dispositifs d'affichage (420) ; quand le dispositif client (410) est connecté à M machines virtuelles, recevoir séparément des bureaux virtuels poussés par les M machines virtuelles ; sélectionner séparément, conformément aux paramètres d'affichage des N dispositifs d'affichage (420), des dispositifs d'affichage pour les M machines virtuelles parmi les N dispositifs d'affichage (420) ; et produire en sortie les bureaux virtuels des M machines virtuelles vers les dispositifs d'affichage sélectionnés séparément pour les M machines virtuelles, dans lequel N n'est pas inférieur à M, N et M sont tous les deux des nombres naturels, et M n'est pas inférieur à 2 ; et
les dispositifs d'affichage sélectionnés séparément pour les M machines virtuelles sont configurés séparément pour afficher les bureaux virtuels des M machines virtuelles produits en sortie par le dispositif client (410) ;
**caractérisé en ce que**
le dispositif client (410) est configuré en outre pour : quand le dispositif client (410) est connecté à un dispositif externe, acquérir séparément des stratégies périphériques des M machines virtuelles, et acquérir un type du dispositif externe ; mapper le dispositif externe sur L machines virtuelles dont les stratégies périphériques correspondent au type du dispositif externe, dans lequel L est un nombre naturel, et L n'est ni inférieur à 1, ni supérieur à M ; et attribuer un droit d'utilisation du dispositif externe à au moins une machine virtuelle dans les L machines virtuelles mappées conformément au type du dispositif externe ;
dans lequel l'attribution d'un droit d'utilisation du dispositif externe à au moins une machine virtuelle dans les L machines virtuelles mappées conformément au type du dispositif externe comprend spécifiquement :
quand le type du dispositif externe est un dispositif audio, l'attribution d'un droit d'utilisation du dispositif audio à une machine virtuelle dans les L machines virtuelles, dans lequel la machine virtuelle acquérant le droit d'utilisation du dispositif audio est une machine virtuelle présentement exploitée par un utilisateur qui utilise le dispositif client ; et
quand le type du dispositif externe est un dispositif d'interface, l'attribution d'un droit d'utilisation du dispositif d'interface à une machine virtuelle dans les L machines virtuelles, par négociation de jeton, dans lequel la machine virtuelle acquérant le droit d'utilisation du dispositif d'interface est une machine virtuelle demandant le dispositif d'interface, et le dispositif d'interface est un dispositif d'interface parallèle/série ou un dispositif d'interface USB (bus série universel).

6. Dispositif client, le dispositif client comprenant :
une unité d'acquisition (610), configurée pour acquérir séparément des paramètres d'affichage de N dispositifs d'affichage connectés ;
une unité de réception (620), configurée pour : quand le dispositif client est connecté à M machines virtuelles, recevoir séparément des bureaux virtuels poussés par les M machines virtuelles ;
une unité de sélection (630), configurée pour sélectionner séparément des dispositifs d'affichage pour les M machines virtuelles parmi les N dispositifs d'affichage conformément aux paramètres d'affichage des N dispositifs d'affichage acquis par l'unité d'acquisition (610) ; et
une unité de sortie (640), configurée pour produire en sortie les bureaux virtuels des M machines virtuelles reçus par l'unité de réception (620) vers les dispositifs d'affichage sélectionnés séparément par l'unité de sélection (630) pour les M machines virtuelles, pour afficher les bureaux virtuels, où N n'est pas inférieur à M, N et M sont tous les deux des nombres naturels et M n'est pas inférieur à 2 ;
**caractérisé en ce que**
l'unité d'acquisition (610) est configurée en outre pour : quand le dispositif client est connecté à un dispositif externe, acquérir séparément des stratégies périphériques des M machines virtuelles, et acquérir un type du dispositif externe ; et
le dispositif client comprend en outre :
une unité de mappage (6500), configurée pour mapper le dispositif externe sur L machines virtuelles dont les stratégies périphériques correspondent au type du dispositif externe, dans lequel L est un nombre naturel, et L n'est ni inférieur à 1, ni supérieur à M ; et
une unité d'attribution (660), configurée pour attribuer, en fonction du type du dispositif externe, un droit d'utilisation du dispositif externe à au moins une machine virtuelle dans les L machines virtuelles mappées par l'unité de mappage (650) ;
dans laquelle l'unité d'attribution (660) comprend au moins l'une des unités suivantes
une première sous-unité d'attribution, configurée pour : quand le type du dispositif externe est un dispositif audio, attribuer un droit d'utilisation du dispositif audio à une machine virtuelle dans les L machines virtuelles, la machine virtuelle acquérant le droit d'utilisation du dispositif audio étant une machine virtuelle présentement exploitée par un utilisateur qui utilise le dispositif client ; et
une seconde sous-unité d'attribution, configurée pour : quand le type du dispositif externe est un dispositif d'interface, attribuer un droit d'utilisation du dispositif d'interface à une machine virtuelle dans les L machines virtuelles, par négociation de jeton, la machine virtuelle acquérant le droit d'utilisation du dispositif d'interface étant une machine virtuelle demandant le dispositif d'interface, et le dispositif d'interface étant un dispositif d'interface parallèle/série ou un dispositif d'interface USB (bus série universel).

7. Dispositif client selon la revendication 6, dans lequel
l'unité d'acquisition (610) est configurée spécifiquement pour acquérir séparément les paramètres d'affichage des N dispositifs d'affichage par appel d'un pilote, les paramètres d'affichage comprenant des paramètres d'état d'utilisation des dispositifs d'affichage ; et
l'unité de sortie (640) est configurée spécifiquement pour produire en sortie, par appel du pilote, les bureaux virtuels des M machines virtuelles vers les dispositifs d'affichage sélectionnés séparément pour les M machines virtuelles, pour afficher les bureaux virtuels.

8. Dispositif client selon la revendication 6 ou 7, dans lequel l'unité de réception (620) comprend :
une sous-unité d'établissement de canaux, configurée pour établir des canaux de protocole de bureau entre le dispositif client et les M machines virtuelles ; et
une sous-unité de réception de bureaux, configurée pour recevoir séparément les bureaux virtuels qui sont transmis par les M machines virtuelles par le biais des M canaux de protocole de bureau établis par la sous-unité d'établissement de canaux.

9. Dispositif client selon l'une quelconque des revendications 6 à 8, dans lequel l'unité de sélection (630) comprend :
une sous-unité de vérification d'état, configurée pour : quand une nouvelle machine virtuelle est connectée, vérifier les paramètres d'état d'utilisation dans les paramètres d'affichage des N dispositifs d'affichage conformément à un ordre dans lequel les M machines virtuelles sont connectées ; et
une sous-unité d'attribution de dispositif, configurée pour attribuer un dispositif d'affichage dont le paramètre d'état d'utilisation est "inutilisé" dans les N dispositifs d'affichage à la machine virtuelle nouvellement connectée conformément aux états d'utilisation des dispositifs d'affichage vérifiés par la sous-unité de vérification d'état.
